Europäisches Patentamt

European Patent Office

Office européen des brevets

(11) Publication number: **0 381 099**
A2

# EUROPEAN PATENT APPLICATION

(21) Application number: 90101691.5

(51) Int. Cl.⁵: **G11B 7/00**

(22) Date of filing: 29.01.90

(30) Priority: 30.01.89 JP 17754/89
17.02.89 JP 36277/89

(43) Date of publication of application:
08.08.90 Bulletin 90/32

(84) Designated Contracting States:
DE FR

(71) Applicant: **HITACHI MAXELL, LTD.**
**1-88, Ushitora 1-chome**
**Ibaraki-shi Osaka-fu(JP)**

(72) Inventor: **Inagoya, Osamu**
**394, Shimoguri, Chiyokawamura**
**Yuki-gun, Ibaraki-ken(JP)**
Inventor: **Sakemoto, Akito**
**4-6, Nishinodai, Yawaramura**
**Tsukuba-gun, Ibaraki-ken(JP)**

(74) Representative: **Patentanwälte Beetz sen. -**
**Beetz jun. Timpe - Siegfried -**
**Schmitt-Fumian**
**Steinsdorfstrasse 10**
**D-8000 München 22(DE)**

(54) **Optical information reading system for reading information on mass-production information medium.**

(57) In an optical information reading system, a spot of light is applied from an optical system, such as a laser optical system, onto a data sheet (5) which has a number of information tracks each having minimum unit light absorbing color-printed portions (30) and minimum unit non-printed portions (32) suitably combined with the printed portions (30) to represent a digital information. The digital information is read by the light reflected by the data sheet (5). The ratio $2\phi/L$ of the diameter $2\phi$ of the light spot formed on the data sheet to the length L of each of the minimum unit light absorbing color-printed portion (30) and the minimum unit non-printed portion (32) in a longitudinal direction of the information track is not more than 0.7. This optical information reading system is highly reliable in operation, and simple in construction, and can be easily manufactured on a mass-production basis at low costs.

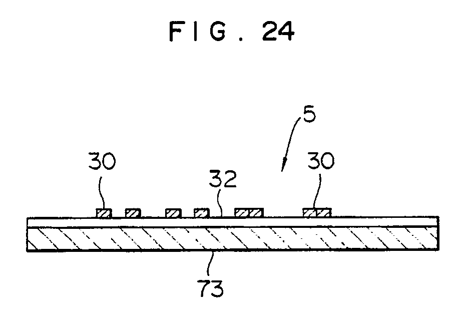

F I G . 24

# OPTICAL INFORMATION READING SYSTEM FOR READING INFORMATION ON MASS-PRODUCTION IN-FORMATION MEDIUM

## BACKGROUND OF THE INVENTION

This invention relates to an optical information reading system, and more particularly to an optical information reading system, for reading information on mass-production information medium, capable of optically reading accurately a data sheet which can contain a large amount of information and can quite inexpensively provide many people with the same information in a stable manner, such data sheet, for example, being made of paper and having stripe patterns for registration purpose.

Recently, there has been an increasing demand for an information recording medium which can provide many people with the same information, and audio and/or visual information media, such as a magnetic tape, a video tape, a CD (Compact Disk), a CDV (Compact Disk Video) and a VD (Video Disk), have now been used in almost the same way as magazines or journals are utilized.

However, the magnetic recording on a magnetic tape, a video tape or the like requires much time for dubbing, and therefore is not suited for mass-production duplication or copying. Moreover, magnetic tapes and video tapes per se are rather expensive, and therefore do not meet the requirement for providing information inexpensively. A CD, a CDV, a VD and the like have the same problem.

These information media are now designed to record various information in digital form. However, such an information medium as a video tape, where information is recorded in the form of magnetizations, has the drawback that it is liable to be affected by an external magnetic field and is less resistant to bending and a flaw. An optical recording medium such as a CD is also less resistant to a flaw.

Particularly when a recording medium is to be distributed to the general public, many subscribers, many users or the like through a distribution route, it is necessary that the recording medium should take a simple form and be resistant to dirt and a flaw from the viewpoint of handling, and besides a large amount of information of a relatively high density to be recorded on the recording medium is required to be duplicated quickly and inexpensively.

In order meet such requirements, it has been proposed to print digital information in the form of a plurality of patterns of different shades on a paper sheet such as a postcard, and to optically scan the tracks constituted by these information pattern rows, thereby optically reading the information.

Fig. 8 is a perspective view of one example of an optical information reader or reading system of this type proposed by one of the inventors of the present invention in the process of completing the present invention, this proposed information reader being not publicly known or published at the time of filing of the original Japanese Patent Applications. Fig. 9 is a plan view of one example of a data sheet used in the information reader of Fig. 8. Fig. 10 is an enlarged view showing tracks on the data sheet. Fig. 11 is a view illustrative of a space information formation of the tracks. Fig. 12 is a plan view of another example of a data sheet. Figs. 13 and 14 are illustrations each showing a waveform on a screen of an oscilloscope obtained when scanning the data sheet of Fig. 12.

The following techniques described below with reference to Figs. 8 to 14 are not the prior art, but constitute the basic concept of the present invention and should be considered as a part of the present invention in so far as it is not inconsistent with the claimed invention as recited in the claims. Therefore, modifications of the techniques described with reference to Figs. 8 to 14 should also be considered as a part of the present invention in so far as they are not inconsistent with the claimed invention.

In Fig. 8, reference numeral 1 denotes an optical information reader. The reader 1 includes a cylinder 7 provided at a generally central portion thereof. A data sheet 5 is attached around the cylinder 7 so that the data sheet 5 is curved. A number of parallel information tracks 3 are printed on one surface of the data sheet 5, and are spaced a predetermined distance from one another. The data sheet 5 may be attached inside the cylinder 7.

A rotary disc 9 is mounted on the front end face of the cylinder 7 and slightly projects therefrom, the disc 9 being driven by a motor 11 for rotation. There is provided a light beam generating mechanism 15 for generating a light beam for scanning the information tracks 3 on the data sheet 5, the light beam generating mechanism 15 being rotatable about an axis 13 of the cylinder 7 in a plane perpendicular to the axis 13. The light beam generating mechanism 15 comprises a light-emitting element 17 such a condenser lens 23. These parts are all supported on a common frame (not shown), and for example, this frame is fixedly secured to the rotary disc 9 so that the above scanning can be carried out. Namely, in the information reader to which the present invention relates, as is not the case with an optical disc, the information recording medium remains stationary whereas the light beam is moved relative to the stationary coordinate system so as to carry out the main scanning for reading purposes. The light emitted from the light-emitting element may not be accurately in alignment with the optical axis of the optical system.

A photodetector element 25 is also supported on the above-mentioned frame. The light-receiving element 25 serves to receive scattered light rays of the light beam applied to the information track 3, and therefore the light-receiving element 25 is disposed in the vicinity of the information tracks 3 or the data sheet 5 carrying these tracks. In the illustrated example, although the light-receiving element 25 is disposed at a rearward portion in the direction of the scanning, it may be disposed at a forward portion in the scanning direction. Also, such light-receiving elements may be provided respectively at the forward and rearward portions in the scanning direction.

There are also provided a feed mechanism and a fine adjustment mechanism (both of which are not shown) so as to feed the cylinder 7, the motor 11, the light beam generating mechanism 15, etc., by a predetermined distance corresponding to the interval between the tracks 3. The feed mechanism can be a mechanical feed device using a screw or the like. The fine adjustment mechanism can comprise a piezoelectric element such as a bimorph element.

A light beam emitted from the light-emitting element 17 is converted by the collimator lens 19 into a beam of parallel light rays having a predetermined width. Then, this light is reflected by the mirror 21 and is applied as a spot onto the information track 3 on the data sheet 5 through the objective lens 23. Then, the light reflected by the data sheet 5 is received by the photodetector element 25, and the output signal of the photodetector element 25 is fed via an amplifier (not shown) to a digital-to-analog (D/A) converter (not shown) where the signal is converted into an analog form. The thus converted signal is finally delivered in the form of an electric as an audio and/or video signal.

When the scanning of one information track 3 is finished, the rotary disc 9 is advanced one pitch by the feed mechanism associated with the motor 11, and the next track 3 is scanned. This operation is repeated until the last track 3 is scanned.

As shown in Fig. 9, a number of information tracks 3 having a width, for example, of about 30 μm are linearly printed on the surface of the data sheet 5 in parallel relation to one another at a predetermined interval, for example, of about 30 μm.

The width of the stripe constituting the information track can be determined as desired. The improvement in the printing technology has now made it possible to print narrower stripes (information tracks) on the data sheet. The overall size of the sheet 5 can also be determined as desired, and depending on the intended application and purpose, a sheet of a suitable size is selected. The number of the information tracks to be printed on the sheet can be varied, and can be suitably determined depending on the amount of information to be transmitted and the data area of the data sheet to be used.

In this example, as shown in Fig. 10, the information track 3 comprises a combination of unit light absorbing color-printed portions 30 of a square shape (one side of which is, for example, about 30 μm and in some cases about 300 μm) and unit non-printed spaces or portions 32 each having the same size as that of the printed portion 30. In accordance with digital information to be transmitted, the unit light absorbing color-printed portions 30 and the unit non-printed spaces 32 are combined together along a straight line to form a linear space pattern representative of specific data. The information corresponding to the digital value "1" is represented by the unit light absorbing color-printed portion 30 on the information track 3 (that is, by the presence of the portion 30 on the track 3), and the presence of the unit non-printed portions 32 represents the information corresponding to the digital value "0". In reverse, the digital values "1" and "0" may be represented by the unit non-printed space portion 32 and the unit light absorbing color-printed portion 30, respectively. When data is composed of consecutive values "1", a corresponding number of unit light absorbing color-printed portions 30 jointly constitute a continuous straight bar pattern.

The shape of the printed portion 30 is not limited to a square shape, and may be of a circular shape. Any shape can be used so long as the track can be formed as a linear space pattern. Further, the printed portion 30 does not always need to have a light-absorbing color, and can be so designed as to be different in reflectivity (due to diffused reflection) of light from the unit space 32.

For forming the tracks, having digital information in the form of such space patterns, on a sheet surface, a master plate having patterns corresponding to the digital information is produced, and the tracks can be printed on the sheet surface by screen printing, ink jet printing, electrostatic printing or the like, using the thus produced master plate. Preferably, ink used for this printing should have a black color.

Fig. 11 illustrates such information recording methods. More specifically, Fig. 11(a) shows the information to be recorded, Fig. 11(b) shows the form of this information recorded by an NRZI modulation method, and Fig. 11(c) shows the form of the information recorded by an MFM method. Fig. 11(d) shows an information pattern in which unit light absorbing color-printed portions 30 represent "1", and unit non-printed spaces 32 represent "0", as described above with reference to Fig. 10.

Fig. 11(e) shows an information pattern in which unit non-printed spaces 32 are used as partitions of the information, and a longer unit light absorbing color-printed portion 30a represents "1", and a shorter unit light absorbing color-printed portion 30b represents "0". Thus, "1" and "0" of the digital information are determined according to the length of the unit light absorbing color-printed portion.

The light absorbing color-printed portions may be of such a design that the thickness and length of the lines and the presence and absence of dots constitute a coded information in combination, such as a bar code.

The data sheet may comprise a resin film, a film of metal such as aluminum, a glass substrate, or a paper sheet. From the viewpoint of the cost of the information transmission, paper is most preferred.

However, since the paper sheet is limp, it may be misloaded. Also, when the paper sheet is expanded and shrunk under the influence of the temperature and moisture, a tracking error may be encountered. To avoid such adverse effects, a data sheet as shown in Fig. 12 may be used.

In Fig. 12, a number of parallel information tracks 3 are printed on a surface of a data sheet 5 at a predetermined interval. A servo pattern is printed on an upper or a lower portion of the sheet 5 (for example, on the upper portion as shown in Fig. 12). The servo pattern is constituted by light absorbing-color stripes 34 of which number is an integral multiple of the number of the information tracks 3.

In Fig. 12, when a light beam scans the stripes 34 and the information tracks 3 in a direction indicated by an arrow, the light beam will pass across many stripes 34 of the servo pattern at an area A and scan the information tracks 3 at a data area B, if the azimuth angle $\theta$ is large.

As shown in Fig. 13, when the azimuth angle $\theta$ is larger than $0°$, those portions of the light-absorbing color stripes 34 of the servo pattern of the area A intersecting changes the intensited of reflected light beam which is displayed on a screen of a CRT, for example, of an oscilloscope in the form of a voltage change with a large interval or period. On the other hand, as shown in Fig. 14 when the azimuth angle $\theta$ is equal to $0°$, the light beam is applied substantially parallel to the light-absorbing color stripes 34 of the servo pattern of the area A, and therefore no characteristic waveform appears on the screen of the CRT of the oscilloscope. Thus, the signal varies in accordance with the angle $\theta$ of the light beam scanning the servo pattern, and the misloading of the sheet and the tracking error of the beam can be detected by detecting the variation of the signal and can be corrected.

In the optical information reader shown in Fig. 8, an automatic focusing control is not carried out, and therefore the construction of the circuitry as well as the control systems is quite simple. This is advantageous in that this optical information reader can be manufactured on a mass-production basis at low costs. However, it can not be said that this optical information reader does not have any problem at all.

More specifically, when it is intended to contain a larger amount of information in a single data sheet 5 (that is, to increase the recording density of the data sheet 5), the size of each of the unit light absorbing color-pringted portion 30 and the unit non-printed portion 32 is required to be smaller. However, with respect to the above optical information reader, the size of each of the unit light absorbing color-printed portion 30 and the unit non-printed portion 32, the size of the light spot applied onto the data sheet 5, etc., have not fully been studied to meet the above situation.

Therefore, when the information is to be transmitted using the data sheet 5 of a higher recording density having the printed and non-printed portions 30 and 32 of a smaller size, not only the intended data but also its adjoining data (i.e., the printed portion 30 or the non-printed portion 32) in the same information track 3 are read. The extreme case is that the data in the adjacent information track 3 are read at the same time. In such a case, the error rate does not fall within a predetermined range, thus adversely affecting the reliability of the operation.

SUMMARY OF THE INVENTION

It is therefore a first object of this invention to provide an optical information reading system which is highly reliable in operation, simple in construction, can be manufactured on a mass-production basis, and is inexpensive.

A second object of the invention is to provide an optical information reading system which can correct the above-mentioned tracking error by means of a simple construction.

The above-mentioned first object has been achieved by an optical information reading system of the invention comprising:

a data sheet having a number of information tracks each having minimum unit light absorbing color-printed portions and minimum unit non-printed portions combined with the printed portions to represent a digital information; and
an optical information reader including an optical system for applying a spot of light onto a surface of the data sheet, and means for scanning the light spot along the information track so as to optically read the digital information by means of the light reflected by the data sheet;
a ratio $2\phi/L$ of a diameter $2\phi$ of the light spot formed on the surface of the data sheet to a length L of each of the minimum unit light absorbing color-printed portion and the minimum unit non-printed portion in a longitudinal direction of the information track being not more than 0.7.

As described above, the optical information reading system of the present invention is not provided with a focusing drive system, and is simple in its control system, and can be produced at low costs. As the ratio $2\phi/L$ of a diameter $2\phi$ of the light spot formed on the surface of the data sheet to the length L of each of the minimum unit light absorbing color-printed portion and the minimum unit non-printed portion in a longitudinal direction of the information track is not more than 0.7, even if the information is recorded on the data sheet at a higher density (that is, the length L of each of the minimum unit light absorbing color printed portion and the minimum unit non-printed portion in the longitudinal direction of the information track is reduced), the information can be accurately read without reading the adjoining minimum unit light absorbing color-printed portion or minimum unit non-printed portion.

The above-mentioned second object has been achieved by an optical information reading system of the invention comprising:
an optical information carrier having optically readable linear information patterns; and
an optical information reader comprising (i) holder means for holding the optical information carrier, (ii) means for applying a spot of light onto a surface of the optical information carrier, (iii) an optical reading head for reading the information pattern by scanning the light spot in a main scanning direction along the information pattern, (iv) means for moving one of the optical information carrier and the optical reading head relative to the other in an auxiliary scanning direction transversely of the information pattern; (v) inclination angle detection means for detecting an angle of inclination of an actual main scanning direction of the lkight spot with respect to the longitudinal direction of the information pattern; and (vi) spot position correction means for displacing the position of the light spot in accordance with the detected inclination angle so that the inclination angle is rendered to zero.

When the incident beam applied to the rotary optical head is inclined at an angle $\theta$ relative to the optical axis, an image height ($h = f\theta$) is produced by a focus lens having a focal distance f, so that the light spot is formed at a point spaced a distance h from a plane (perpendicular to the rotation axis) generated by the rotating optical axis.

The above and other objects, advantages and features of the present invention will be made clearer upon making reference to the detailed description of the preferred embodiments and the accompanying drawings.

BRIEF DESCRIPTION OF THE DRAWINGS

Fig. 1 is a schematic perspective view of an optical information reader and reading system provided in accordance with an embodiment of the present invention;

Fig. 2 is a schematic view showing a beam spot position correction mechanism forming an important part of the present invention;

Figs. 3 and 4 are views each illustrative of the development of an image height h as a result of inclination of the beam;

Fig. 5 is an illustration showing the locus of a light spot with respect to a track;

Fig. 6 is an illustration showing the characteristics of the congtrol of a rotation angle of a half mirror;

Fig. 7 is an illustration showing the characteristics of the displacement or deviation of the light spot relative to the centerline of the track;

Fig. 8 is a schematic perspective view of an optical information reader proposed by one of the inventors of the present invention in the course of achieving the present invention;

Fig. 9 is a plan view of one example of a data sheet;

Fig. 10 is an enlarged view, showing tracks on the data sheet;

Figs. 11 (a) to (e) are illustrations showing a space information formation of the tracks;

Fig. 12 is a plan view of another example of a data sheet;

Figs. 13 and 14 are illustrations each showing the characteristics of a waveform on a screen of an oscilloscope obtained when a light beam scans the data sheet of Fig. 12;

Figs. 15, 16 and 17 are illustrations each showing the relation between $2\phi/L$ and the error rate;

Fig. 18 is an illustration explanatory of measurement conditions required for measuring the above relation between $2\phi/L$ and the error rate;

Fig. 19 is an illustration showing the relation between the numerical aperture NA of a condenser lens and the reading error rate;

Fig. 20 is a schematic perspective view of a modified optical information reader of the invention;

Fig. 21 is a view explanatory of the numerical aperture NA of a condenser lens;

Fig. 22 is a view explanatory of a distance Z between the focus of a light beam and the actual beam spot position;

Fig. 23 is an illustration showing the relation between the numerical aperture NA of the condenser lens and the diameter of the beam spot obtained when varying the above-mentioned distance Z; and

Fig. 24 is a view showing a modified data sheet used in the optical information reader of the invention.

## DESCRIPTION OF THE PREFERRED EMBODIMENTS OF THE INVENTION

Preferred embodiments of the invention will now be described with reference to the drawings.

Fig. 1 is a schematic perspective view of one preferred embodiment of an optical information reader of the present invention. Fig. 2 is a schematic view of a correction mechanism for correcting the position of a beam spot, the correction mechanism forming an important part of the present invention.

An optical information carrier or recording medium 1a is wound on and attached to a cylinder 32a so as to form a part of a periphery of a cylindrical formation. A rotary disc 43 is mounted on one end face of the cylinder 32a for integral rotation therewith. A focusing lens 44 and a mirror 42 are mounted on the rotary disc 43 within the cylindrical formation, the focus lens 44 and the mirror 42 jointly constituting a rotary optical head. The focus lens 44 and the mirror 42 are rotated by a motor 34a about an axis 36 of the cylindrical formation.

A laser diode 50 mounted on a non-rotatable portion (not shown) emits a light beam which is converted by a collimator lens 48 into a beam of parallel light rays. Then, this light is deflected 90° by a half mirror 46, and is applied to the above-mentioned rotary optical head, and converges on the information carrier 1a. The reflected light passes again along the light path in a reverse direction, and passes through the half mirror 46, and is condensed or focused on a photodiode 38 by a condenser lens 40, so that the thus condensed light is converted into an electric signal, thereby effecting the reading of the information.

As shown in Fig. 2, the half mirror 46 is rotatably supported by a shaft 55, and is urged in one direction by a coil spring 56. A bimorph actuator 60 which is a piezoelectric ceramic element is so disposed as to engage a projection 57 formed on one end or edge of the half mirror 46. When a voltage is applied across the bimorph actuator 60, this actuator 60 is deformed as shown by phantom lines in Fig. 2.

As a result, the half mirror 46 is rotated as indicated by an arrow, so that the beam deflected by the half mirror 46 is inclined with respect to the optical axis. If the angle of rotation of the half mirror 46 is represented by $\theta$, the angle of inclination of the beam is represented by $2\theta$. Figs. 3 and 4 show this condition. The angle of rotation of the optical head is 0° in Fig. 3, and is 180° in Fig. 4, where the angle of rotation of the optical head is defined to be 0° when the optical axis of the focus lens 44 is disposed in a plane perpendicular to the shaft 55 about which the half mirror 46 rotates. As shown in Figs. 3 and 4, when the beam is inclined at an angle of $2\theta$ with respect to the optical axis 36, the light spot condensed by the focus lens 44 is displaced a distance of h $(= 2f \cdot \theta)$ from the intersection between an original optical axis and the information carrier 1a.

Here, h represents the focal distance of the focus lens 44. When the angle of rotation of the optical head is 180°, the light spot is displaced in a direction reverse to the direction of displacement achieved when this rotation angle is 0°. If the amount of this displacement is represented by -h, then the light spot can be displaced a distance of ±h $(= \pm 2f \cdot \theta)$ by rotating the half mirror 46 by an angle of $\theta$.

Fig. 5 shows an illustration in which the tack 3 and the locus of the light spot are plotted with respect to the angle $\alpha$ of rotation of the optical head when the information carrier 1a is supported in such a manner that the information carrier 1a is inclined 50 $\mu$m relative to the plane of rotation of the optical head. The focal distance of the focus lens 44 was 10 mm, and when the half mirror 46 was inclined by 2.5 m·rad, the light spot followed along the track 3 within a deviation of ±6 $\mu$m from the centerline of the track 3. Also, when the half mirror 46 is rotated in accordance with the rotation of the optical head in such a manner that the angle $\theta$ of rotation of the half mirror 46 meets the condition $2\theta = 5 - 1.5 \sin \alpha$ [m·rad] as shown in Fig. 6, the deviation of the light spot from the centerline of the track 3 can be kept to within ±1.5 $\mu$m, as shown in Fig. 7.

Thus, by angularly moving the half mirror 46, the position of the beam spot can be corrected or amended. Therefore, the half mirror 46 and the mechanism for angularly moving the half mirror 46 jointly constitute means for correcting the position of the light spot. However, such a spot position correction means can be constituted by a mechanism for inclining the laser source 50 relative to the optical axis or a mechanism for inclining the collimator lens 48 relative to the optical axis.

Inclination angle detection means comprises, for example, the stripes 34 shown in Fig. 12 and an element for detecting these stripes.

As described above, according to the present invention, the misloading of the optical information carrier and the tracking error can be detected and corrected by a simple construction.

Another embodiment of an optical information reader of the invention will now be described.

Figs. 15 to 17 are graphs each showing the relation between $2\phi/L$ and the reading error rate. Fig. 18 is a view explanatory of the conditions for measurement of the relation between $2\phi/L$ and the reading error rate. Fig. 19 is a graph showing the relation of the numerical aperture NA of a condenser lens (objective lens) and the reading error rate.

The optical information reader of this embodiment is similar in general construction to the optical information reader shown in Fig. 8, and therefore explanation of the general construction is omitted. Also, a data sheet to be set on the optical information reader is almost similar in writing manner to the data sheet shown in Figs. 9 and 10 (although the size of each of a unit light absorbing color-printed portion 30 and a non-printed portion 32 may be smaller), and therefore general explanation of the data sheet is also omitted.

Generally, the diameter $2\phi_0$ of a laser spot at the focus of a condenser lens 23 is represented by the following formula, using the relationship between the numerical aperture NA of the condenser lens 23 and a laser wavelength $\lambda$:

$2\phi_0 = 0.8 \times \lambda/NA$,

where the laser spot diameter $2\phi_0$ is such that the intensity at the center of the spot is not higher than $l/e^2$.

The numerical aperture NA of the condenser lens 23 is expressed by the following formula:

$NA = \sin \beta$

where $\beta$ represents a half of the angle having the vertex disposed at the focus of the condenser lens 23 and covering the effective diameter of the condenser lens 23, as shown in Fig. 21.

The spot diameter $2\phi$ in the vicinity of the focus is expressed by the following formula:

$2\phi = 2\phi_0\sqrt{1 + (\lambda Z\pi/\phi_0{}^2)}$

where Z represents the distance between the focus (where the spot diameter is $2\phi_0$) and the plane where the diameter $2\phi$ of the actually formed spot exists (see Fig. 22).

The inventors of the present invention have made an extensive study of the relationship between the numerical aperture (NA) of the condenser lens used in an optical information reader of this type and the diameter of the spot formed on the surface of the data sheet. The results of this study are shown in Fig. 23. In this Figure, a curve A is a characteristic curve representing the relation between the numerical aperture NA and the beam spot diameter when the distance Z is 100 $\mu$m. Similarly, a characteristic curve B represents such relation when the distance Z is 50 $\mu$m, and a characteristic curve C represents such relation when the distance Z is 20 $\mu$m, and a characteristic curve D represents such relation when the distance Z is 0 $\mu$m.

As is clear from Fig. 23, when the numerical aperture NA of the condenser lens is relatively large (for example, 0.16 or 0.2) with the distance Z from the focus being relatively long (for example, 100 $\mu$m or 50 $\mu$m), the diameter of the actually formed spot is large. When the beam spot diameter is thus large, not only the intended unit portionb ut also the adjoining unit light absorbing color-printed portion 30 or unit non-printed portion 32 (see Fig. 10) are optically read simultaneously. This causes an error.

Therefore, as is clear from Fig. 23, preferably, the numerical aperture NA of the condenser lens used for an optical information reader of this type should be limited to the range of 0.05 to 0.10 and more preferably to the range of 0.06 to 0.08 so that the beam spot can be formed as small as possible even when the distance from the focus is relatively long (for example, 100 $\mu$m or 50 $\mu$m). When the diameter of the beam spot is thus small even if the distance Z from the focus to the actual beam spot is relatively long, the possibility of errors in the reading is small even if the position of mounting of the condenser lens along the optical axis slightly varies. This obviates the need for strictly, controlling the dimensional accuracy when assembling the optical information reader, and therefore the mass productivity can be improved. For these reasons, the numerical aperture NA of the condenser lens was adjusted to 0.08 in various measurements described below.

Figs. 15 to 17 show the results of an extensive study of the relation between the length L of each of the unit light absorbing color-printed portion 30 and the unit non-printed portion 32 in the longitudinal direction of the information track 3 and the diameter $2\phi$ of the beam spot.

First, the conditions of this measurement will be described with reference to Fig. 18. In order that a test pattern sheet (corresponding to a data sheet) can be the optimum pattern sheet, there is used a laser-sensitive film comprising a polyester film having a thickness of 0.1 mm and a photosensitive coating which is coated on the polyester film and is sensitive to the light from the laser diode. A laser beam is applied to the laser film, and then the laser sensitive film is developed. Then, a white paint is coated to the reverse side or surface of the laser-sensitive film, thereby preparing the test pattern sheet. In this pattern, the minimum unit light absorbing color-printed portions 30 and the unit non-printed portions 32 are combined together to form the information track 3, as shown in Fig. 18. A distance or gap G between the unit light absorbing color-printed portions 30 of two adjacent information tracks 3 is greater than the length L of the printed portion 30 in the longitudinal direction of the track 3.

As to the beam spot diameter $2\phi$, and a laser beam is applied to the similar laser-sensitive film, and the diameter of that portion of the laser-sensitive film reacted by this laser radiation is measured, thereby determining the beam spot diameter $2\phi$.

Fig. 15 shows the relation between $2\phi/L$ and the error rate of the reading obtained by varying the laser spot diameter $2\phi$, the length L of the unit light absorbing color-printed portion 30 being 100 $\mu$m. Fig. 16 shows a similar relation, but the length L is 30 $\mu$m. Fig. 17 also shows a similar relation, but the length L is 15 $\mu$m.

In measuring the reading error rate, a test pattern sheet having $8 \times 10^6$ of alternate unit absorbing color-printed portions 30 and non-printed portions 32 (corresponding to 1MB) is prepared, using a laser-sensitive film similar to the above-mentioned laser-sensitive film. The numerical aperture NA of the condenser lens 23 is adjusted to 0.08, and the power of the laser beam is 3 mW, and the digital information of the above test pattern sheet is read. The number of errors of the reading at this time is counted, and the reading error rate is determined by the thus counted number.

As is clear from the measurement results of Figs. 15 to 17, when the beam spot diameter $2\phi$ is caused to decrease with a decrease of the length L of the unit light absorbing color-printed portion 30 so that the value of $2\phi/L$ is not more than 0.7, the error rate is not higher than $10^{-4}$ (i.e., one reading error per 10,000 digital signals) which is sufficient for practical use. Particularly when the length L of each of the unit light absorbing color-printed portion 30 and the unit non-printed portion 32 is not more than 30 $\mu$m with the value of $2\phi/L$ being not more than 0.7, the characteristic curve representative of the relation between $2\phi/L$ and the error rate is relatively smooth or gentle, and the error rate is low and stable. Therefore, this condition is preferred.

As described above, the reading error rate of not more than $10^{-4}$ enables a sufficient practical use. The reason for this is that if the error rate is not more than $10^{-4}$, audio or voice signals and/or video signals can be read without any practical difficulty by the addition of an error checking and correction (ECC) signal.

Referring to Fig. 19, a test pattern in which the length L of each of a unit light absorbing color-printed portion 30 and a unit non-printed portion 32 is 30 $\mu$m as well as a test pattern in which the length L is 15 $\mu$m are printed respectively on synthetic paper sheets. The numerical aperture NA of the condenser lens is varied by adjusting its focal distance and the diameter of the aperture in order to examine the error rate. Fig. 19 is a characteristic view showing the results of this examination.

As is clear from Fig. 19, in a case where the length L of each of the unit light absorbing color-printed portion 30 and the unit non-printed portion 32 is 30 $\mu$m, it is preferred that the numerical aperture NA of the condenser lens 23 be in the range of 0.03 to 0.26. In a case where the length L is 15 $\mu$m, it is preferred that the numerical aperture NA be in the range of 0.06 and 0.12. Therefore, when the numerical aperture NA is in the range of 0.06 to 0.12, the error rate is advantageously very low irrespective of whether the length L of each of the unit light absorbing color-printed portion 30 and the unit non-printed portion 32 is 30 $\mu$m or 15 $\mu$m.

In view of the ordinary printing technique, it is difficult to precisely print patterns having a length L of less than 15 $\mu$m on a mass-production basis. Therefore, it is usually proper that the lower limit of the length L of each of the unit light absorbing color-printed portion 30 and the unit non-printed portion 32 be 15 $\mu$m.

Fig. 20 shows still another embodiment of an optical information reader of the invention. This optical information reader differs from the optical information reader of Fig. 8 in that a half mirror 66 is disposed between a light-emitting element 17 and a collimator lens 19 and in that a condenser lens 67 and a light-receiving element 25 are arranged in the vicinity of the half mirror 66. With this construction, the laser beam reflected by a data sheet 5 is caused to pass back along the same path along which the laser beam has advanced to the data sheet 5, that is, via a mirror 21, the collimator lens 19, the half mirror 66 and then the condenser lens 67 to the light-receiving element 25.

Example of the data sheets used in the optical information readers to constitute an optical information reading system include art paper and coated paper. In such coated paper, a white mineral paint is mixed with an adhesive, and a gloss is put on it by a cast coating method or the like.

Examples of the above white paint include clay, talc, gypsum, barium sulfate, calcium carbonate, magnesium carbonate, titanium oxide and zinc sulfide.

Examples of the above adhesive include starch, hie glue, casein, gelatin and latex, and some of these are suitably mixed together.

For adjusting the gloss of the coated paper, for example, the kind of the white paint to be used is changed, or the kind and/or the mixture ratio of the adhesive is changed, or the coating amount of the cast coating is changed, or the rate of feed of the paper by gloss dryer rolls are changed.

In the above embodiments, the minimum unit light absorbing color-printed portion and the minimum unit non-printed portion which constitute the information track have a square pattern of which four sides have the same length. However, the present invention is not limited to such pattern and is applicable to any other suitable pattern such as a rectangular pattern (having longer sides and shorter sides) and a circular pattern.

Even if any pattern is used, the distance G between two adjacent information tracks is greater than the length L of each of the unit light absorbing color-printed portion 30 and the unit non-printed portion 32 in the longitudinal direction of the information track (that is, $G \leq L$), as described above in Fig. 18.

In the present invention, as described above, the ratio $(2\phi/L)$ of the light spot diameter $2\phi$ to the length L of each of the minimum unit light absorbing color-printed portion and the minimum unit non-printed portion in the longitudinal direction of the information track is limited to not more than 0.7. By achieving this, there can be provided the optical information reader which causes less reading errors even if the data sheet of a high recording density is used, and is reliable in operation, and can be manufactured at low costs on a mass-productionb asis.

As shown in Fig. 24, the data sheet 5 comprises a base sheet or substrate 73, "0" information portion 32 constituted by a white ink printed on the substrate 73, and "1" information portions 30 constituted by a black ink printed on the "0" information portion 32 as a dot pattern stripe.

It is possible that the white printed portion 32 serving as "0" information portion is not provided on a given area of the substrate 73 but is printed over the entire surface of the substrate 73, as shown in Fig. 24.

In the above embodiment, although the "1" information portion is printed by a black ink whereas the "0" information portion is printed by a white ink, this can be reversed.

The two-color (white and black) printing is rather inferior in recognizability and aesthetic sense from the viewpoint of design and fashion. Therefore, the substrate and the printed dot pattern may be multicolored in so far as the optical detection is not affected.

Instead of being printed by intaglio printing, letterpress printing, screen printing or the like, the information track 3 may be printed by photographic printing. More specifically, the photographic printing may be not only diazo printing or copying (wet copying) or silver salt photography but also photolithography (which is utilized, for example, in the production of a semiconductor integrated circuit) in which an image of a mask pattern is formed on a photoresist layer on the substrate, and an selective etching is effected by a suitable etching means such as etchant to thereby obtain the intended pattern. In this case, the size of the information portions 30 and 32 can be made much smaller, so that the data can be recorded on the data sheet 5 at an extremely high density.

## Claims

1. An optical information reading system comprising:
a data sheet having a number of information tracks each having minimum unit light absorbing color-printed portions and minimum unit non-printed portions combined with said printed portions to represent a digital information; and
an optical information reader including an optical system for applying a spot of light onto a surface of said data sheet, and means for scanning said light spot along said information track so as to optically read said digital information by means of the light reflected by said data sheet;
a ratio $2\phi/L$ of a diameter $2\phi$ of said light spot formed on the surface of said data sheet to a length L of each of said minimum unit light absorbing color-printed portion and said minimum unit non-printed portion in a longitudinal direction of said information track being not more than 0.7.

2. An optical information reading system according to claim 1, in which the length L of each of said minimum unit light absorbing color-printed portion and said minimum unit non-printed portion is not more than 100 $\mu$m.

3. An optical information reading system according to claim 1, in which the length L of each of said minimum unit light absorbing color-printed portion and said minimum unit non-printed portion is in the range of between 15 $\mu$m and 30 $\mu$m.

4. An optical information reading system according to claim 3, in which said optical system includes a condenser lens disposed in the vicinity of the surface of said data sheet, a numerical aperture of said condenser lens being in the range of between 0.06 and 0.12.

5. An optical information reading system according to claim 1, in which an error rate of the reading of the information is not higher than $10^{-4}$.

6. An optical information reading system according to claim 3, in which each of said minimum unit light absorbing color-printed portion and said minimum unit non-printed portion is constituted by a pattern of a quadrilateral shape.

7. An optical information ·reading system according to claim 1, in which said data sheet is disposed within a distance of 100 μm from the focus of said light spot.

8. An optical information reading system comprising:
an optical information carrier having optically readable linear information patterns; and
an optical information reader comprising (i) holder means for holding said optical information carrier, (ii) means for applying a spot of light onto a surface of said optical information carrier, (iii) an optical reading head for reading said information pattern by scanning said light spot in a main scanning direction along said information pattern, (iv) means for moving one of said optical information carrier and said optical reading head relative to the other in an auxiliary scanning direction transversely of said information pattern; (v) inclination angle detection means for detecting an angle of inclination of an actual main scanning direction of said light spot with respect to the longitudinal direction of said information pattern; and (vi) spot position correction means for displacing the position of said light spot in accordance with the detected inclination angle so that said inclination angle is rendered to zero.

9. An optical information reading system according to claim 8, in which said information pattern has minimum unit light absorbing color-printed portions and minimum unit non-printed portions combined with said printed portions, the length of each of said minimum unit light absorbing color-printed portion and said minimum unit non-printed portion being not more than 30 μm.

10. An optical information reading system according to claim 8, in which said spot position correction means includes a half mirror which is rotatable so as to change a path of travel of a light beam forming said light spot.

11. An optical information reading system according to claim 10, in which said half mirror is rotated by a bimorph actuator.